# EUROPÄISCHE PATENTSCHRIFT

(11) **EP 0 795 830 B1**
(45) Veröffentlichungstag und Bekanntmachung des Hinweises auf die Patenterteilung: **28.12.2005**
(21) Anmeldenummer: 97103545.6
(22) Anmeldetag: 04.03.1997
(51) Int. Cl.: G06F 13/40

(54) **Anordnung zum Anschluss eines Gerätes an ein Leitungssystem**
Arrangement for connecting a device to a power line system
Dispositif de connexion d'un appareil au système de lignes d'alimentation

(30) Priorität: 13.03.1996 DE 19609882
(43) Veröffentlichungstag der Anmeldung: 17.09.1997
(73) Patentinhaber: Fujitsu Siemens Computers GmbH, 80807 München (DE)
(72) Erfinder: Aarts, Jacobus, 86199 Augsburg (DE); Depta, Robert, 86179 Augsburg (DE); Graf, Robert, 86179 Augsburg (DE)
(74) Vertreter: Epping - Hermann - Fischer

(56) Entgegenhaltungen:
- EP-A- 0 402 055
- EP-A- 0 632 393
- EP-A- 0 658 850
- "METHOD FOR CARD HOT PLUG DETECTION AND CONTROL" IBM TECHNICAL DISCLOSURE BULLETIN,US,IBM CORP. NEW YORK, Bd. 35, Nr. 5, 1. Oktober 1992 (1992-10-01), Seiten 391-394, XP000313021 ISSN: 0018-8689

## Beschreibung

Die Erfindung betrifft eine Anordnung zum Anschluß eines Gerätes an ein Leitungssystem, das unter Spannung steht, wobei störende Auswirkungen infolge eines plötzlichen Anstiegs oder Abfalls der Versorgungsspannungen vermieden werden sollen. Letzteres ist insbesondere dann von Bedeutung, wenn es sich bei den Geräten z.B. um Systemkomponenten am Systembus einer Rechneranordnung handelt, so daß zusätzlich undefinierte logische Zustände am Systembus ausgelöst werden können.

Bei einer aus US 5.210.855 bekannten Lösung mit einer Mehrebenensteckverbindung sind drei Kontaktebenen vorgesehen, von denen eine erste zur Kontaktierung des Masseanschlusses, eine zweite zur Kontaktierung der Versorgungsspannungsanschlüsse und eine dritte zur Kontaktierung von Datenanschlüssen dient. Auf diese Weise erfolgt die Kontaktierung bzw. Abkontaktierung der verschiedenen Kontaktebenen zeitlich nacheinander. Dadurch werden z.B. die Datenleitungen erst durchgeschaltet, wenn die über einen Regler nachgeregelte Versorgungsspannung voll wirksam ist.

EP 0 402 055 offenbart ein System mit drei Kontaktebenen zum Anschluß eines Gerätes an ein unter Spannung stehendes Leitungssystem, wobei über die mittlere Kontaktebene die Versorgungsspannung angeschlossen wird. Ein Steuerkreis regelt die Versogungsspannung auf den gewünschten Versorgungsspannungswert hoch.

Die Erfindung hat ebenfalls eine Anordnung zum Gegenstand, die den Anschluß bzw. das Entfernen von Geräten an bzw. von einem Leitungssystem störungsfrei ermöglicht, wobei eine eindeutige Überwachung der beim An- und Abkontaktieren auftretenden Zustände möglich ist.

Diese Aufgabe wird durch die Merkmale des Patentanspruchs 1 gelöst.

Durch die Verwendung von drei verschiedenen Kontaktebenen mit den Versorgungsspannungen in der mittleren Kontaktebene ist eine eindeutige Signalisierung des Beginns bzw. des Endes der Kontaktgabe für die Versorgungsspannungen möglich. Dabei wird überwacht, ob die für das Geräte erst hochzuregelnden Versorgungsspannungen auch ihren Endwert erreichen oder nicht, wobei beide Zustände durch unterschiedliche Signale gekennzeichnet werden.

Weiterbildungen der Erfindung ergeben sich aus den Unteransprüchen, wobei die den Beginn und das Ende eines Steckvorganges signalisierenden Signale in einfacher Weise der Erzeugung eines Rücksetzsignales beim Anschluß an den Systembus einer Rechneranordnung herangezogen werden können.

Einzelheiten der Erfindung seien nachfolgend anhand eines in der Zeichnung dargestellten Ausführungsbeispieles näher erläutert. Im einzelnen zeigen
- FIG 1: ein Prinzipschaltbild der Anordnung gemäß der Erfindung,
- FIG 2: ein Blockschaltbild für die Spannungsregelegung und Signalerzeugung auf der Geräteseite und
- FIG 3: den zeitlichen Verlauf der beim An- und Abkontaktieren entstehenden Signale.

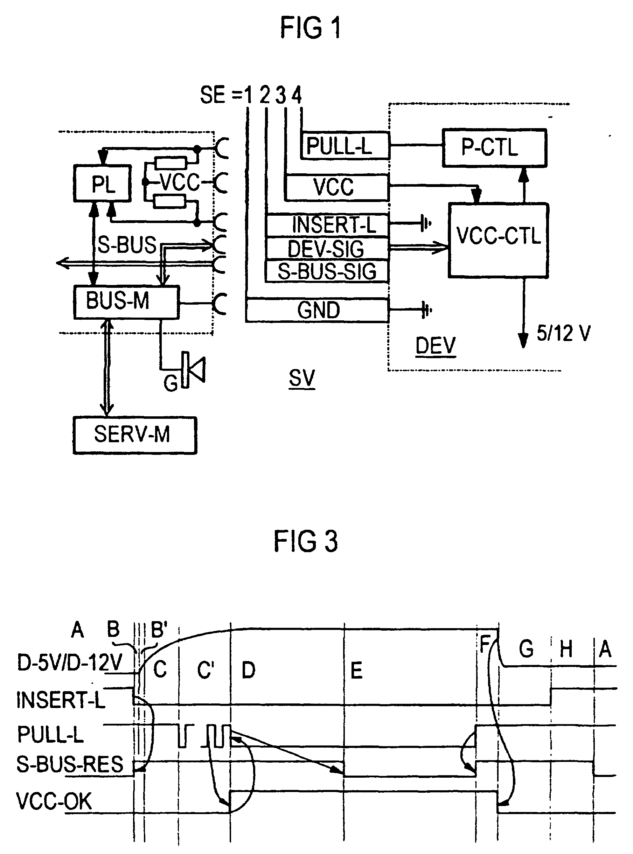

Dem Ausführungsbeispiel von FIG 1 ist eine Rechneranordnung mit einem Systembus S-BUS im linken Teil der Figur zugrundelegt, an den über die Steckvorrichtung SV als Systemkomponente DEV beispielsweise ein Festplattenlaufwerk anzuschließen ist.

Die Steckvorrichtung SV weist insgesamt vier verschiedene Steckerebenen SE1 bis SE4 auf, über die Kontaktierungen für folgende Signale hergestellt werden:
- SE1:: Masseanschlüsse GND
- SE2:: Systembussignale S-BUS-SIG,
Gerätesteuersignale DEV-SIG
Zustandssignal INSERT-L
- SE3:: Versorgungsspannungen VCC
- SE4:: Zustandssignal PULL-L.

Dabei werden die Kontaktierungen beim Anstecken des Gerätes in der Reihenfolge SE1 bis SE4 hergestellt und beim Abstecken in umgekehrter Reihenfolge gelöst.

Mit der Anschlußvorrichtung sind auf der Geräteseite zwei Steuerkreise gekoppelt, nämlich VCC-CTL für die Hochregelung der zugeführten Gerätespannungen und P-CTL für dieSignalisierung der verschiedenen Schaltzustände beim Kontaktieren.

Auf der Systemseite im linken Teil der Figur werden die über die Kontaktierung gelieferten Zustandssignale INSERT-L und PULL-L von einer Überwachungslogik PL ausgewertet und dem Busmanagement BUS-M gemeldet, das dann das Rücksetzsignal S-BUS-RES für den Systembus S-BUS auslöst und ein akustisches Signal G während des nicht vollständig abgeschlossenen Kontaktierungsvorganges wirksam schaltet. Parallel dazu könnte auch eine optische Signalisierung erfolgen, beispielsweise durch eine Leuchtdiode am Gerät DEV, die über einen der Kontakte für die Gerätesignale DEV-SIG angesteuert wird.

Das ganze Kontrollsystem kann dabei beispielsweise in ein Server-Management SERV-M eingebunden sein, das in bekannter Weise für die Überwachung der Systemkonfiguration zuständig ist.

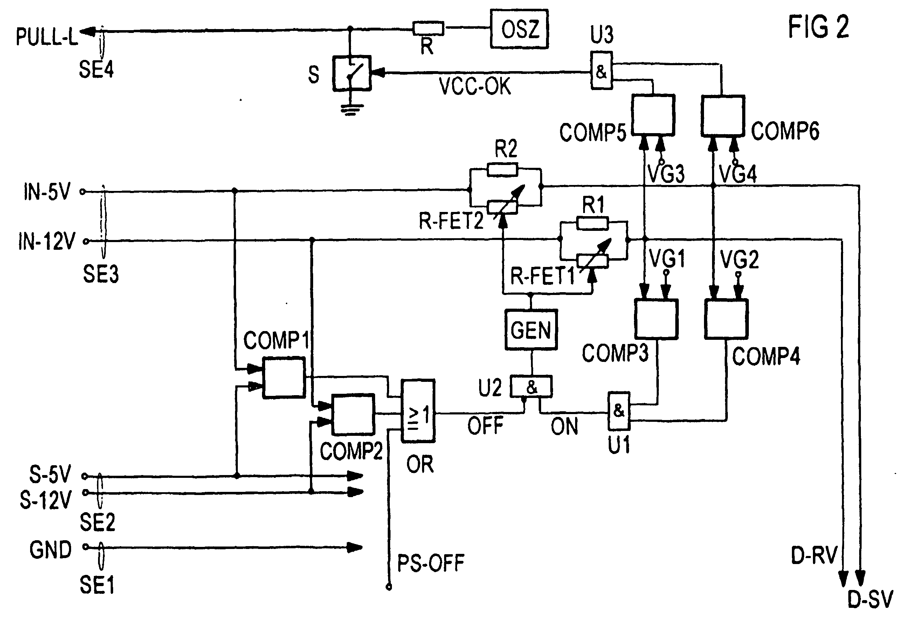

FIG 2 zeigt das Blockschaltbild für die beiden Steuerkreise VCC-CTL und P-CTL von FIG 1, wobei den Versorgungsspannungen an der Steckerebene SE3 entsprechende Versorgungsspannungen auch über die Steckerebene SE2 zur Spannungsversorgung dieser Steuerkreise geliefert werden.

Bei Kontaktierung der Steckerebene SE3 fließt zunächst bedingt durch die Widerstände R1 und R2 nur ein sehr begrenzter Strom, um die Spannung an den nicht dargestellten üblichen Kondensatoren aufzubauen. Während dieser Zeit werden die einander entsprechenden Spannungen der Steckerebene SE2 und SE3 durch die Vergleicher COMP1 und COMP2 miteinander verglichen. Solange diese ungleich sind, wird über das ODER-Glied OR ein Sperrsignal OFF geliefert.

Andererseits wird mit den Vergleichern COMP3 und COMP4 die Spannung am Speiseausgang für das Gerät DEV überwacht und geprüft, ob die jeweils zum Vergleich dienenden Mindestspannungen VG1 bzw. VG2 erreicht sind. Ist dies der Fall, wird über die UND-Glieder U1 und U2 die Hochregelung wirksam geschaltet, indem ein Stellgenerator GEN die parallel zu den Begrenzungswiderständen R1 und R2 angeordneten regelbaren Widerstände beispielsweise in Form von MOS-Feldeffekttransistoren R-FET1 und R-FET2 stetig verändert, bis die volle Eingangsspannung IN-5V bzw. IN-12V am Ausgang als Gerätespannung P-5V bzw.P-12V erreicht wird.

Mit den Vergleichern COMP5 und COMP6 wird weiterhin überwacht, ob die hochgeregelte Gerätespannung auch vorgegebene Mindestwerte VG3 bzw. VG4 erreicht. Ist dieses der Fall, wird über das UND-Glied U3 das Signal VCC-OK ausgelöst, das den Schalter S schließt und damit das Zustandssignal PULL-L in der Steckerebene SE4 dauerhaft auf Massepotential hält.

Bei geöffnetem Schalter S dagegen liefert ein Oszillator OSZ über einen Widerstand R ein alternierendes Massepotential an den zugehörigen Kontakt der Steckvorrichtung.

Mit einem gesonderten Gerätesignal PS-OFF, das beispielsweise vom Server-Management SERV-M ausgeht, besteht außerdem die Möglichkeit, über das ODER-Glied OR das UND-Glied U2 zu sperren und die Spannungshochregelung trotz ordnungsgemäßer Kontaktierung zu unterdrücken.

Die Zustandssignale INSERT-L und PULL-L liefern auf der Systemseite beispielsweise über eine EXOR-Verknüpfung in der Überwachungsschaltung Pl ein Steuersignal für das Wirksamschalten des Rücksetzsignals S-BUS-RES am Systembus S-BUS durch das Busmanagement BUS-M.

Die sich beim Herstellen und Lösen der Steckverbindung ergebenden Signalverläufe sind in FIG 3 aufgezeigt, wobei sich folgende Zustände einstellen können.
- A:: Steckerebene SE2 der Steckvorrichtung SV hat noch keinen Kontakt
- B:: Steckerebene SE2 hat Kontakt.
Die Steuereinrichtungen VCC-CTL und P-CTL werden mit Strom versorgt und damit wirksamgeschaltet. Signal INSERT-L wird wirksam und löst das Rücksetzsignal S-BUS-RET auf dem Systembus S-BUS aus.
Der Oszillator liefert ein pulsierendes Signal PULL-L, das aber wegen der noch nicht erfolgten Kontaktierung der Steckerebene SE4 ohne Auswirkung ist.
- B':: Steckerebene SE3 hat kontaktiert. Die Geräteversorgungsspannungen VCC sind wirksam und bauen sich auf. Sobald die Vorspannungen die unteren Überwachungsgrenzen erreicht haben, wird in den Zustand C übergeleitet.
- C:: Die anfängliche Strombegrenzung der durchzuschaltenden Versorgungsspannungen wird aufgehoben und diese weich hochgeregelt.
Sobald anschließend auch die Steckerebene SE4 kontaktiert, ist der Zustand C' erreicht.
- C':: Über den Kontakt der Steckerebene SE4 wird das vom Oszillator OSZ in FIG 2 gelieferte pulsierende Signal PULL-L auf der Systemseite wirksam.
Sobald die Endwerte der hochgeregelten Versorgungsspannung erreicht sind, wird das Signal VCC-OK wirksam und schaltet das Signal PULL-L in ein Dauersignal um, was den Zustand D einleitet.
- D:: Die Kontaktierung ist ordnungsgemäß erfolgt. Das Rücksetzsignal S-BUS-RES wird verzögert abgeschaltet, was in den Zustand E überleitet, der dem normalen, vollständig ankontaktierten Betriebszustand entspricht.
- E:: Wird aus dem normalen Betriebszustand heraus die Steckverbindung gelöst, dann entfällt als erstes das Signal PULL-L, was systemseitig zur Spannungserhöhung führt und damit den zustand F einleitet.
- F:: In unmittelbarer Auswirkung wird wegen der EXOR-Verknüpfung von INSERT-L und PULL-L das Rücksetzsignal S-BUS-RES am Systembus S-BUS ausgelöst.
Das weitere Lösen der Steckverbindung führt dann zum Abschalten der Versorgungsspannung VCC auf der Steckerebene SE3, was die maximale Spannungsbrenzung wirksam werden läßt und damit zum Wegfall des Signals VCC-OK führt. Damit wird in den Zustand G übergeleitet.
- G:: Es erfolgt das weitere Abkontaktieren, wobei schließlich das Signal INSERT-L entfällt und den Zustand H einleitet.
- H:: Das Rücksetzsignal S-BUS-RES bleibt noch einige Zeit wirksam. Nach seinem Abschalten ist der Zustand A wieder erreicht.

## Patentansprüche

1. Anordnung zum Anschluß eines Gerätes (DEV) an ein unter Spannung stehendes Leitungssystem (S-BUS) unter Verwendung einer Mehrebenen-Steckvorrichtung (SV) mit wenigstens drei Kontaktebenen (z.B. SE2 bis SE4), von denen eine (SE2) den Beginn und eine (SE4) das Ende des Steckvorganges mit Signalen (Insert-L bzw. PULL-L) der Geräteseite signalisiert, während über eine zwischen diesen beiden Kontaktebenen liegende Kontaktebene (SE3) die Versorgungsspannungen (VCC) für das anzuschließende Gerät (DEV) zugeführt werden, wobei die Versorgungsspannungen (VCC) dem Eingang eines Steuerkreises (VCC-CTL) zugeführt werden, der an seinem Ausgang die Versorgungsspannungen für das Gerät von Null auf den gewünschten Versorgungsspannungswert (5/12V) hochregelt **dadurch gekennzeichnet, daß** über die das Ende des Steckvorganges signalisierende Kontaktebene (SE4) vom Beginn der Kontaktierung an ein oszillierendes Signal (PULL-L) geliefert wird, das bei Erreichen der gewünschten Spannungswerte (5/12V) am Ausgang des Steuerkreises (VCC-CTL) in ein Dauersignal übergeht.

2. Anordnung nach Anspruch 1,
**dadurch gekennzeichnet,**
**daß** über die zu Beginn des Steckvorganges kontaktgebende Kontaktebene (SE2) zusätzlich die Versorgungsspannungen (VCC) zum Wirksamschalten des Steuerkreises für die Hochregelung der durchzuschaltenden Versorgungsspannungen (VCC) und für die Erzeugung des das Ende des Steckvorganges anzeigenden Signales (PULL-L) geliefert werden.

3. Anordnung nach Anspruch 2,
**dadurch gekennzeichnet,**
**daß** die über die beiden verschiedenen Kontaktebenen (SE2 und SE3) zugeführten Versorgungsspannungen (S-5V/S-12V, IN-5V/IN-12V) miteinander verglichen werden und bei Ungleichheit die Hochregelung der zum Gerät (DEV) durchzuschaltenden Versorgungsspannungen gesperrt bleibt,
und **daß** die Hochreglegung der durchzuschaltenden Versorgungsspannungen (IN-5V/IN-12V) erst einsetzt, wenn die zunächst infolge Spannungsbegrenzung sich einstellenden Ausgangsspannungen (D-5V/D-12V) einen vorgegebenen Wert erreicht haben.

4. Anordnung nach einem der Ansprüche 1 bis 3,
**dadurch gekennzeichnet,**
**daß** bei mehreren unterschiedlichen Versorgungsspannungen die einzelnen Steuervorgänge nur eingeleitet werden, wenn die einzuhaltenden Bedingungen mit Bezug auf alle Versorgungsspannungen gleichzeitig erfüllt sind.

5. Anordnung nach einem der Ansprüche 1 bis 4, für den Anschluß von Systemkomponenten (DEV) an den Systembus (S-BUS) einer Rechneranordnung ohne Übergang in den Halte-Zustand,
**dadurch gekennzeichnet,**
**daß** die den Beginn und das Ende eines Steckvorganges signalisierenden Kontaktebenen (SE2,SE4) an das System Zustandssignale (INSERT-L,PULL-L) zur Ableitung eines Rücksetzsignals (S-BUS-RES) liefern, das vor der Zu- bzw. Abschaltung der Versorgungsspannungen (VCC) für die Systemkomponente (DEV) am Systembus (S-BUS) wirksam und bei vollständig ein- bzw. ausgesteckter Steckvorrichtung (SV) verzögert wieder abgeschaltet wird.

6. Anordnung nach Anspruch 5,
**dadurch gekennzeichnet,**
**daß** die Verzögerung der Abschaltung des Rücksetzsignals (S-BUS-RES) steuerbar ist.

7. Anordnung nach Anspruch 5 oder 6,
**dadurch gekennzeichnet,**
**daß** mit dem zu Beginn des Steckvorganges wirksam werdenden Zustandssignal (INSERT-L) zeitlich verzögert ein akustisches und/oder optisches Hinweiszeichen (G) ausgelöst wird, das andauert, bis die Spannungshochregelung nach der Kontaktierung abgeschlossen ist.

8. Anordnung nach einem der Ansprüche 5 bis 7,
**dadurch gekennzeichnet,**
**daß** über Kontakte für die Gerätesignale (DEV-SIG) auch bei einer angesteckten Systemkomponente (DEV) die Durchschaltung der Stromversorgung gesperrt werden kann (Signal PS-OFF).

9. Anordnung nach einem der Ansprüche 1 bis 8,
**dadurch gekennzeichnet,**
**daß** eine weitere Kontaktebene (SE1) für den Masseanschluß (GND)vorgesehen ist.

## Claims

1. Arrangement for connecting a device (DEV) to a voltage-carrying cable system (S-BUS) using a multi-plane plugging apparatus (SV) having at least three contact planes (for example SE2 to SE4), of which one (SE2) signals the beginning and one (SE4) the end of the plugging operation, to the device side, using signals (INSERT-L or PULL-L), while the supply voltages (VCC) for the device (DEV) to be connected are supplied via a contact plane (SE3) lying between these two contact planes, the supply voltages (VCC) being supplied to the input of a control circuit (VCC-CTL), which raises the supply voltages for the device from zero up to the desired supply voltage value (5/12 V) at its output, **characterized in that**, from the beginning of contact-making on, an oscillating signal (PULL-L) is delivered via the contact plane (SE4) signalling the end of the plugging operation, which oscillating signal (PULL-L) is converted to a continuous signal when the desired voltage values (5/12 V) are reached at the output of the control circuit (VCC-CTL).

2. Arrangement according to Claim 1, **characterized in that**, in addition, the supply voltages (VCC) are delivered via the contact plane (SE2), which makes contact at the beginning of the plugging operation, for the purpose of activating the control circuit for raising the supply voltages (VCC) to be connected and for producing the signal (PULL-L) indicating the end of the plugging operation.

3. Arrangement according to Claim 2, **characterized in that** the supply voltages (S-5V/S-12V, IN-5V/IN-12V), which are supplied via the two different contact planes (SE2 and SE3), are compared with one another, and, in the event that these voltages are unequal, raising of the supply voltages to be connected to the device (DEV) continues to be blocked, and **in that** raising of the supply voltages (IN-5V/IN-12V) to be connected is only set if the output voltages (D-5V/D-12V), which are set initially as a result of voltage limitation, have reached a predetermined value.

4. Arrangement according to one of Claims 1 to 3, **characterized in that**, in the case of a plurality of different supply voltages, the individual control operations are only introduced if the conditions to be maintained in relation to all of the supply voltages are fulfilled at the same time.

5. Arrangement according to one of Claims 1 to 4, for the connection of system components (DEV) to the system bus (S-BUS) of a computer arrangement without changeover to the hold state, **characterized in that** the contact planes (SE2, SE4) signalling the beginning and the end of a plugging operation deliver state signals (INSERT-L, PULL-L) to the system for the purpose of deriving a reset signal (S-BUS-RES), which becomes active before connection or disconnection of the supply voltages (VCC) for the system component (DEV) at the system bus (S-BUS) and is switched off again, with a delay, when the plugging apparatus (SV) is completely inserted or withdrawn.

6. Arrangement according to Claim 5, **characterized in that** the delay in the disconnection of the reset signal (S-BUS-RES) can be controlled.

7. Arrangement according to Claim 5 or 6, **characterized in that** an acoustic and/or visual indication (G) is triggered, with a time delay, by the state signal (INSERT-L), which becomes active at the beginning of the plugging operation, said acoustic and/or visual indication (G) lasting until voltage raising is complete after contact-making.

8. Arrangement according to one of Claims 5 to 7, **characterized in that** connection of the current supply can be blocked (signal PS-OFF) via contacts for the device signals (DEV-SIG) even when a system component (DEV) is plugged on.

9. Arrangement according to one of Claims 1 to 8, **characterized in that** a further contact plane (SE1) is provided for the earth connection (GND).

## Revendications

1. Dispositif de connexion d'un appareil d'aide à un système (S-BUS) de lignes d'alimentation sous tension en utilisant un dispositif (SV) d'enfichage à plusieurs plans ayant au moins trois plans (par exemple SE2 à SE4) de contact, dont l'un (SE2) signale le début et l'un (SE4) la fin de l'opération d'enfichage par des signaux (INSERT-L et PULL-L) du côté appareil, tandis que, par un plan (SE3) de contact se trouvant entre ces deux plans de contact, les tensions (VCC) d'alimentation de l'appareil (DEV) à connecter sont appliquées, les tensions (VCC) d'alimentation étant appliquées à l'entrée d'un circuit (VCC-CTL) de commande qui, à sa sortie, règle vers le haut les tensions d'alimentation de l'appareil de zéro à la valeur (5/12V) de tension d'alimentation souhaitée, **caractérisé en ce qu'**il est fourni par le plan (SE4) de contact signalant la fin de l'opération d'enfichage depuis le début de la mise en contact un signal (PULL-L) oscillant qui se transforme en un signal permanent lorsque les valeurs (5/12V) de tension souhaitées sont atteintes à la sortie du circuit (VCC-CTL) de commande.

2. Dispositif suivant la revendication 1,
**caractérisé**
**en ce que**, par le plan (SE2) de contact donnant le contact au début de l'opération d'enfichage, il est fourni en plus des tensions (VCC) d'alimentation la connexion efficace du circuit de commande pour la régulation vers le haut des tensions (VCC) d'alimentation à appliquer et pour la production du signal (PULL-L) indiquant la fin de l'opération d'enfichage.

3. Dispositif suivant la revendication 2,
**caractérisé**
**en ce que** les tensions (S-5V/S-12V, IN-5V/IN-12V) d'alimentation appliquées par les deux plans (SE2 et SE3) de contact différents sont comparées l'une à l'autre et, s'il n'y a pas d'égalité, la régulation vers le haut des tensions d'alimentation à appliquer à l'appareil (DEV) restent bloquées, et
**en ce que** la régulation vers le haut de tension (IN-5V/IN-12V) d'alimentation à appliquer n'est utilisée que si les tensions (D-5V/D-12V) de sortie s'établissant d'abord en raison de la limitation de la tension ont atteint une valeur prescrite.

4. Dispositif suivant l'une des revendications 1 à 3,
**caractérisé**
**en ce que**, s'il y a plusieurs tensions d'alimentation différentes, les diverses opérations de commande ne sont lancées que si les conditions à respecter sont satisfaites simultanément pour toutes les tensions d'alimentation.

5. Dispositif suivant l'une des revendications 1 à 4, pour la connexion de composants (DEV) de système au bus (S-BUS) de système d'un dispositif informatique sans passage à l'état de maintien,
**caractérisé**
**en ce que** les plans (SE2, SE4) de contact signalant le début et la fin d'une opération d'enfichage fournissent au système des signaux (INSERT-L, PULL-L) d'état pour déduire un signal (S-BUS-RES) de remise à l'état initial qui est efficace avant d'appliquer ou de cesser d'appliquer une tension (VCC) d'alimentation des composants (DEV) du système bus (S-BUS) du système et qui cesse à nouveau d'être appliqué de manière retardée lorsque le dispositif (SV) d'enfichage est complètement enfiché ou désenfiché.

6. Dispositif suivant la revendication 5,
**caractérisé**
**en ce que** le retard de l'interruption du signal (S-BUS-RES) de remise à l'état initial peut être commandé.

7. Dispositif suivant la revendication 5 ou 6,
**caractérisé**
**en ce qu'**il est déclenché par le signal (INSERT-L) d'état devenant efficace au début de l'opération d'enfichage de façon retardée dans le temps un signe (G) d'indication acoustique et/ou optique qui dure jusqu'à ce que la régulation vers le haut de la tension soit interrompue après la mise en contact.

8. Dispositif suivant l'une des revendications 5 à 7,
**caractérisé**
**en ce que** l'application de l'alimentation en courant peut être bloquée par des contacts pour les signaux (DEV-SIG) de l'appareil même lorsqu'un composant (DEV) du système est enfiché (Signal PS-OFF).

9. Dispositif suivant l'une des revendications 1 à 8,
**caractérisé**
**en ce qu'**il est prévu un autre plan (SE1) de contact pour la borne (GND) de masse.
